(19)

Europäisches
Patentamt
European
Patent Office
Office européen
des brevets

(11)　EP 2 105 757 A2

(12)　EUROPEAN PATENT APPLICATION

(43) Date of publication:
30.09.2009 Bulletin 2009/40

(51) Int Cl.:
*G01S 1/00* (2006.01)

(21) Application number: 09250483.6

(22) Date of filing: 24.02.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 28.03.2008 JP 2008088078

(71) Applicant: Sony Corporation
Tokyo 108-0075 (JP)

(72) Inventors:
• Seino, Shizuhiro
Tokyo 108-0075 (JP)
• Awata, Hideki
Tokyo 108-0075 (JP)

(74) Representative: Robinson, Nigel Alexander Julian
et al
D Young & Co
120 Holborn
London EC1N 2DY (GB)

(54) **Information processing apparatus, position estimating method, program, artificial satellite system**

(57)　There is provided an information processing apparatus arranged with a satellite position estimating section for estimating a position of an artificial satellite at an arbitrary time by substituting the arbitrary time to an estimate equation of the position of the artificial satellite represented by a sum of one, or two or more periodic functional arguments.

**FIG.5**

Printed by Jouve, 75001 PARIS (FR)

**Description**

The present invention relates to an information processing apparatus, a position estimating method, a program, and an artificial satellite system.

In recent years, a GPS (Global Positioning System) receiver receiving a navigation message transmitted from an artificial satellite and calculating the current position thereof is being widely used by being applied to a mobile telephone, a car navigation system, and the like.

Specifically, the navigation message transmitted from the artificial satellite contains orbit information indicating the orbit of the artificial satellite, and information such as transmission time of a signal. The GPS receiver receives the navigation messages from four or more artificial satellites, and calculates the position of each artificial satellite from the orbit information contained in the navigation message. The GPS receiver then calculates the current three-dimensional position through a simultaneous equation based on the position of each artificial satellite, and the difference in the transmission time and the reception time of the navigation message. The method of calculating the position of each artificial satellite from the orbit information is described in, for example, Japanese Patent Application Laid-Open No. 11-64481.

The navigation messages transmitted from the four or more artificial satellites is desired when calculating the three-dimensional position because an error exists between the clock incorporated the GPS receiver and an atomic clock arranged in the artificial satellite. Four unknown parameters including the three-dimensional position and time can be calculated by using the navigation messages transmitted from the four or more artificial satellites.

The frame of the navigation message transmitted from the artificial satellite has a length of about 30 seconds, and is configured by five subframes. The orbit information and the like used when the GPS receiver calculates the position of the artificial satellite are contained in the first three subframes, and about 18 seconds are necessary until receiving such three subframes. Thus, if the GPS receiver does not have the orbit information of the artificial satellite or if the time of validity has expired, about several tens of seconds to a few minutes are necessary until the current position is calculated, and problem arises in usability.

The present invention addresses the above-identified, and other issues associated with conventional methods and apparatuses, and it is desirable to provide a new and improved information processing apparatus capable of estimating the position of the artificial satellite at an early point, a position estimating method, a program, and an artificial satellite system.

According to an embodiment of the present invention, there is provided an information processing apparatus including a satellite position estimating section for estimating a position of an artificial satellite at an arbitrary time by substituting the arbitrary time to an estimate equation of the position of the artificial satellite represented by a sum of one, or two or more periodic functional arguments.

According to such configuration, the satellite position estimating section can estimate the position of the artificial satellite without using the satellite positional information contained in the navigation message. In other words, the information processing apparatus can grasp the position of the artificial satellite more rapidly and through a relatively easy method of calculating the estimate equation represented by the sum of the periodic functional arguments.

The information processing apparatus may further include a receiving section for receiving a signal transmitted from the artificial satellite, and acquiring satellite positional information indicating the position of the artificial satellite contained in the signal; a storage section for recording the satellite positional information acquired by the receiving section; and a coefficient calculating section for calculating each coefficient of the periodic functional argument in the estimate equation from the satellite positional information recorded in the storage section. The satellite position estimating section substitutes the coefficient calculated by the coefficient calculating section to the estimate equation in addition to the arbitrary time to estimate the position of the artificial satellite.

According to such configuration, new satellite positional information is recorded in the storage section. The coefficient calculating section calculates each coefficient of the periodic functional argument from the satellite positional information recorded in the storage section, and thus each coefficient of the periodic functional argument is sequentially updated to a new value. Therefore, according to the information processing apparatus, accuracy of the estimate equation of the position of the artificial satellite can be maintained even after time has elapsed.

The coefficient calculating section may calculate the coefficient of the periodic functional argument having a first period based on the satellite positional information acquired by the receiving section within a first time period, and calculate the coefficient of the periodic functional argument having a second period shorter than the first time period based on the satellite positional information acquired by the receiving section within a second time period shorter than the first period. The accuracy of the coefficient is a concern when the coefficient of the periodic functional argument having a predetermined period is calculated based on the satellite positional information acquired within a time period extremely shorter than the predetermined period, or when calculated based on the satellite positional information acquired within a time period extremely longer than the predetermined period. The accuracy of the estimate equation and the accuracy of the estimate position of the artificial satellite can be enhanced by calculating the coefficient of the periodic functional argument based on the satellite positional information acquired over a longer time period with the longer the period of the periodic functional argument.

The satellite positional information may include a plurality of parameters for specifying the position of the artificial satellite, and the estimate equation may differ according to each of the plurality of parameters. According to such configuration, each parameter changes differently with elapse of time, and thus an appropriate estimate value can be calculated for each parameter by applying different estimate equations for each parameter.

The information processing apparatus may further include a reception controlling section for intermittently activating the receiving section in a sleep mode to cause the receiving section to acquire the satellite positional information. According to such configuration, new satellite positional information is intermittently acquired by the receiving section. As a result, each coefficient of the periodic functional argument in the estimate equation is sequentially updated to a new value by the coefficient calculating section. Therefore, the information processing apparatus can suppress a case where the satellite positional information is not acquired over a long period of time and the reliability of the coefficient lowers.

The information processing apparatus may further include an elapsed time determining section for determining whether or not a predetermined time has elapsed from the calculation of each coefficient of the periodic functional argument by the coefficient calculating section. The coefficient calculating section may again calculate each coefficient of the periodic functional argument when the elapsed time determining section determines that the predetermined time has elapsed.

The information processing apparatus may further include an apparatus position estimating section for estimating the position of the own apparatus at the arbitrary time based on the position of the artificial satellite at the arbitrary time estimated by the satellite position estimating section. According to such information processing apparatus, the position of the artificial satellite can be estimated without using the satellite positional information contained in the navigation message. Therefore, the information processing apparatus including the apparatus position estimating section can reduce the time for estimating the position of the own apparatus, thereby enhancing the usability.

The information processing apparatus may further include a storage section for recording the estimate equation obtained in an external device. The satellite position estimating section may estimate the position of the artificial satellite based on the estimate equation recorded in the storage section. According to such configuration, the configuration of deriving the estimate equation does not necessarily need to be arranged in the information processing apparatus, and thus the configuration of the information processing apparatus can be simplified.

According to another embodiment of the present invention, there is provided a position estimating method including the steps of: calculating each coefficient of a periodic functional argument in an estimate equation of a position of an artificial satellite represented by a sum of one, or two or more periodic functional arguments from satellite positional information indicating a previous position of the artificial satellite; and estimating the position of the artificial satellite at an arbitrary time by substituting the arbitrary time and the coefficient to the estimate equation.

According to another embodiment of the present invention, there is provided a program for causing a computer to function as a satellite position estimating section for estimating a position of an artificial satellite at an arbitrary time by substituting the arbitrary time to an estimate equation of the position of the artificial satellite represented by a sum of one, or two or more periodic functional arguments.

Such program can cause a hardware source of a computer including CPU, ROM, RAM, or the like to execute the functions of the satellite position estimating section described above. In other words, the computer using the relevant program can function as the above-described satellite position estimating section.

According to another embodiment of the present invention, there is provided an artificial satellite system including an artificial satellite, and a receiving device for receiving a signal transmitted from the artificial satellite. More specifically, the artificial satellite transmits a signal containing satellite positional information indicating the position of the artificial satellite. The receiving device includes a receiving section for receiving the signal transmitted from the artificial satellite, and acquiring the satellite positional information indicating the position of the artificial satellite contained in the signal, a storage section for recording the satellite positional information acquired by the receiving section, a coefficient calculating section for calculating each coefficient of a periodic functional argument in an estimate equation of the position of the artificial satellite represented by a sum of one, or two or more periodic functional arguments from the satellite positional information recorded in the storage section, and a satellite position estimating section for estimating the position of the artificial satellite at an arbitrary time by substituting the arbitrary time and the coefficient calculated by the coefficient calculating section to the estimate equation.

According to such configuration, new satellite positional information is recorded in the storage section. The coefficient calculating section calculates each coefficient of the periodic functional argument from the satellite positional information recorded in the storage section, and thus each coefficient of the periodic functional argument is sequentially updated to a new value. Therefore, the information processing apparatus can maintain the accuracy of the estimate equation of the position of the artificial satellite even after time has elapsed. Furthermore, the satellite position estimating section can estimate the position of the artificial satellite without using the satellite positional information contained in the navigation message. In other words, the information processing apparatus can grasp the position of the artificial satellite more rapidly and through a relatively easy method of calculating the estimate equation represented by the sum of the periodic functional arguments.

According to at least preferred embodiments of the present invention described above, the position of the artificial satellite can be estimated at an early point.

FIG. 1 is an explanatory view showing a configuration of an artificial satellite system according to the present example embodiment;

FIG. 2 is an explanatory view showing an example of an orbit of the artificial satellite in an XY coordinate system;

FIG. 3 is an explanatory view showing an example of an orbit of the artificial satellite 10 in an ECEF coordinate system;

FIG. 4 is an explanatory view showing a frame configuration of a navigation message;

FIG. 5 is an explanatory view showing a hardware configuration of a receiver according to the present example embodiment;

FIG. 6 is a flowchart showing the flow of the operation example of the receiver according to the present example embodiment;

FIG. 7 is a function block diagram schematically showing one example of the functions implemented in the CPU;

FIG. 8A is an explanatory view showing the actual measurement value of the eccentricity e;

FIG. 8B is an explanatory view showing the actual measurement value of the square root of the long radius A of the orbit;

FIG. 8C is an explanatory view showing the actual measurement value of the orbit inclination io;

FIG. 8D is an explanatory view showing the actual measurement value of the average anomaly Mo;

FIG. 8E is an explanatory view showing the actual measurement value of the argument of perigee $\omega_0$;

FIG. 8F is an explanatory view showing the actual value of the longitude of ascending node $\Omega_0$;

FIG. 9 is a flowchart showing the flow from the determination of the model formula in time of manufacturing to the estimation of the position of the artificial satellite; and

FIG. 10 is a flowchart showing the flow from the update of the coefficient to the estimation of the position of the artificial satellite.

Hereinafter, preferred example embodiments of the present invention will be described in detail with reference to the appended drawings. Note that, in this specification and the appended drawings, structural elements that have substantially the same function and structure are denoted with the same reference numerals, and repeated explanation of these structural elements is omitted.

The "DETAILED DESCRIPTION OF THE PREFERRED EMBODIMENTS" will be described according to the order of items indicated below.

[1] Brief overview of artificial satellite system

    [1-1] Brief overview of position measurement by GPS
    [1-2] Method of representing artificial satellite position
    [1-3] Configuration of navigation message

[2] Background of the present embodiment
[3] Configuration of receiver according to present embodiment

    [3-1] Hardware configuration of receiver
    [3-2] Brief overview of operation example of receiver
    [3-3] Detailed functions of CPU
    [3-4] Flow of position estimating method

[4] Conclusion

[1] Brief overview of artificial satellite system

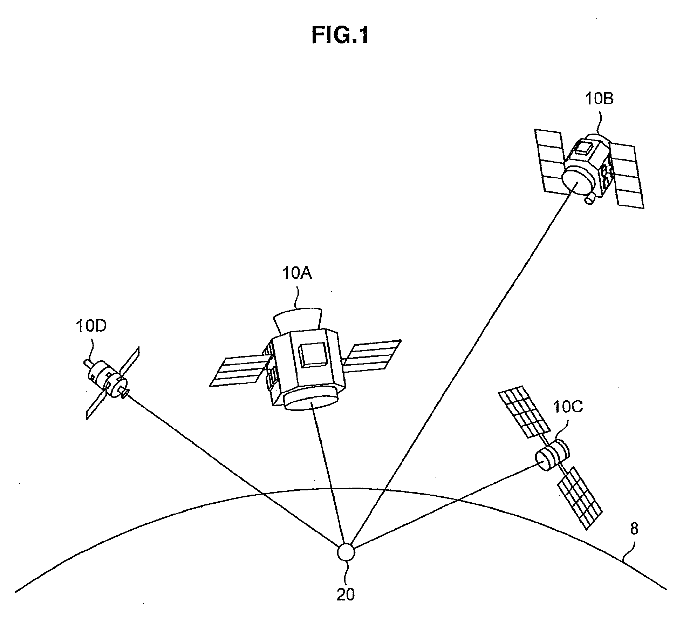

First, an artificial satellite system 1 according to the present embodiment will be schematically described with reference to FIGS. 1 to 4.

[1-1] Brief overview of position measurement by GPS

FIG. 1 is an explanatory view showing a configuration of the artificial satellite system 1 according to the present embodiment. As shown in FIG. 1, the artificial satellite system 1 includes a plurality of artificial satellites 10A to 10D, and a receiver 20. In FIG. 1, a capital letter alphabet is denoted after the reference number such as the artificial satellites 10A to 10D to distinguish each artificial satellite, but the artificial satellites are collectively referred to as the artificial satellite 10 if each artificial satellite is not to be distinguished in particular.

The artificial satellite 10 (GPS satellite) orbits in the sky of the earth 8. Only four artificial satellites 10A to 10D are shown in FIG. 1, but a total of 24 artificial satellites, four on each six orbital plane, orbit in the sky of the earth 8.

The artificial satellite 10 transmits a navigation message (details are described in "[1-3] Content of navigation message") including orbit information of the artificial satellite, and ephemeris information such as transmission time of the navigation message. The artificial satellite 10 includes an atomic clock, and the transmission time is expressed in units of one second, for example, according to the atomic clock arranged in the artificial satellite 10.

The artificial satellite 10 spread diffuses the data of 50 bps with a signal referred to as L1 band, C/A code, that is, with Gold code, which code length is 1,023 and the chip rate is 1.023 MHz, and transmits the navigation message by a signal in which a carrier of 1,575.42 MHz is BPSK (Binary Phase Shift Keying) modulated with the spread spectrum signal.

The receiver 20 on the earth 8 receives the navigation message transmitted from the artificial satellites 10A to 10D, and calculates the current position of the own apparatus based on the received navigation message.

More specifically, the receiver 20 receives the navigation message transmitted from the artificial satellites 10A to 10D, and acquires the ephemeris information from the navigation message. The receiver 20 then calculates the positions of the artificial satellites 10A to 10D from the ephemeris information. The receiver 20 also calculates the distance between the artificial satellites 10A to 10D and the receiver 20 from the difference in the transmission time contained in the ephemeris information and the reception time of the navigation message. Thereafter, the receiver 20 uses the respective calculated positions of the artificial satellites 10A to 10D, and the distance between each artificial satellite 10A to 10D and the receiver 20 to calculate an equation having the current three-dimensional position of the receiver 20 as an unknown.

The navigation messages transmitted from the four or more artificial satellites 10 are necessary when calculating the current three-dimensional position of the receiver 20 in such manner. This is because an error exists between the clock (RTC: Real Time Clock) incorporated in the receiver 20 and the atomic clock arranged in the artificial satellite 10. The receiver 20 according to the present embodiment can calculate the position of the artificial satellite 10 without using the ephemeris information contained in the navigation message as described in "[3] Configuration of receiver according to present embodiment"

The artificial satellite 10 updates the ephemeris information at a predetermined period, and transmits the navigation message containing the updated ephemeris information. Since the artificial satellite 10 is constantly moving, the error between the position of the artificial satellite 10 calculated based on the ephemeris information and the actual position of the artificial satellite 10 becomes larger with elapse of time from the update of the ephemeris information. Therefore, the time of validity of about two hours is set to the ephemeris information contained in the navigation message.

The position measurement by the GPS has been schematically described with reference to FIG. 1. In FIG. 1, the receiver 20 is indicated with a circle as one example of an information processing apparatus, but the receiver 20 may be an information processing apparatus such as PC (Personal Computer), home video processing device (DVD recorder, video cassette recorder etc.), mobile telephone, PHS (Personal Handyphone System), portable music reproduction device, portable video processing device, PDA (Personal Digital Assistants), home game machines, portable game machines, home electronics, in-vehicles and the like.

[1-2] Method of representing artificial satellite position

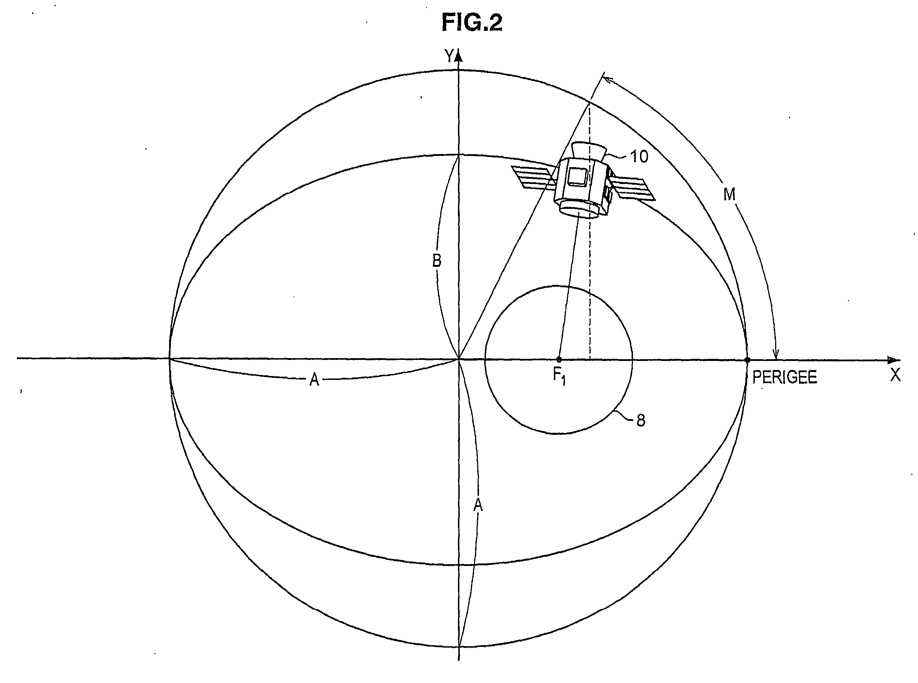

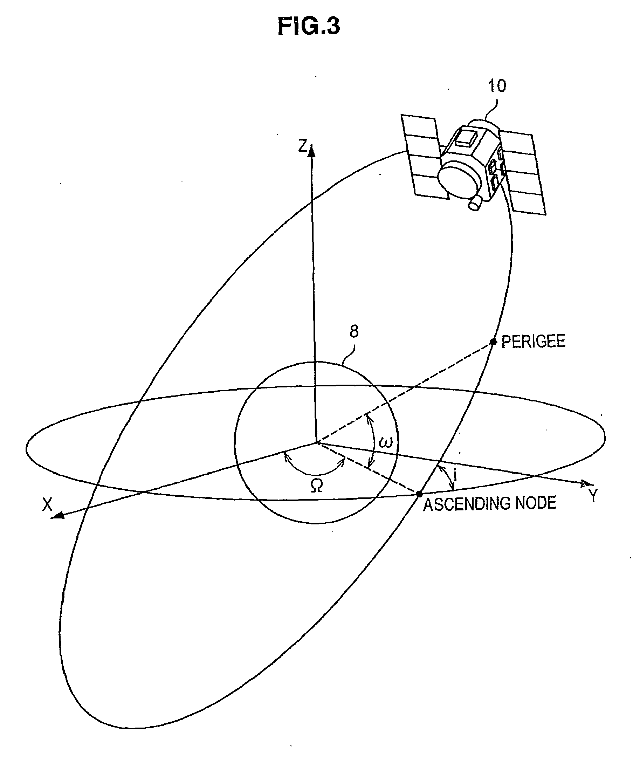

The parameters serving as satellite position information used in representing the position of the artificial satellite 10 will now be described with reference to FIGS. 2 and 3.

FIG. 2 is an explanatory view showing an example of an orbit of the artificial satellite 10 in an XY coordinate system. As shown in FIG. 2, in the XY coordinate system, the orbit of the artificial satellite 10 orbiting around the earth 8 satisfies Kepler's law, and is assumed to draw an elliptic orbit having the center of gravity F1 of the earth 8 as one focus. Such elliptic orbit is expressed by a long radius A of the elliptic orbit, an eccentricity e representing the flatness of the ellipse, and an average anomaly M. A point closest to the earth 8 on the orbit is called a perigee. The eccentricity e is a value that satisfies the following Formula 1. In Formula 1, B is a short radius of the ellipse.

[Formula 1]

$$B = A\sqrt{1-e^2} \qquad \text{(Formula 1)}$$

FIG. 3 is an explanatory view showing an example of an orbit of the artificial satellite 10 in an ECEF (Earth-Centered Earth-Fixed) coordinate system. The ECEF coordinate system is a coordinate system having the center of gravity of the earth 8 as the origin, and the X axis directed to vernal equinox.

As shown in FIG. 3, the orbit of the artificial satellite 10 in the ECEF coordinate system is expressed by a longitude of ascending node $\Omega$, an argument of perigee $\omega$, and an orbit inclination i. A point where the artificial satellite 10 passes the equatorial plane is called an ascending node, and the longitude of ascending node $\Omega$ indicates an angle between the ascending node and the X axis. The argument of perigee $\omega$ is an angle indicating the direction of perigee seen from the origin with the ascending node as the reference. The orbit inclination i indicates an angle formed by the equatorial plane and the orbital plane.

As described above, the position of the artificial satellite 10 at a specific time can be expressed by the six elements of the orbit including the long radius of the orbit A, the eccentricity e, the average anomaly M, the longitude of ascending node $\Omega$, the argument of perigee $\omega$, and the orbit inclination i.

[1-3] Configuration of navigation message

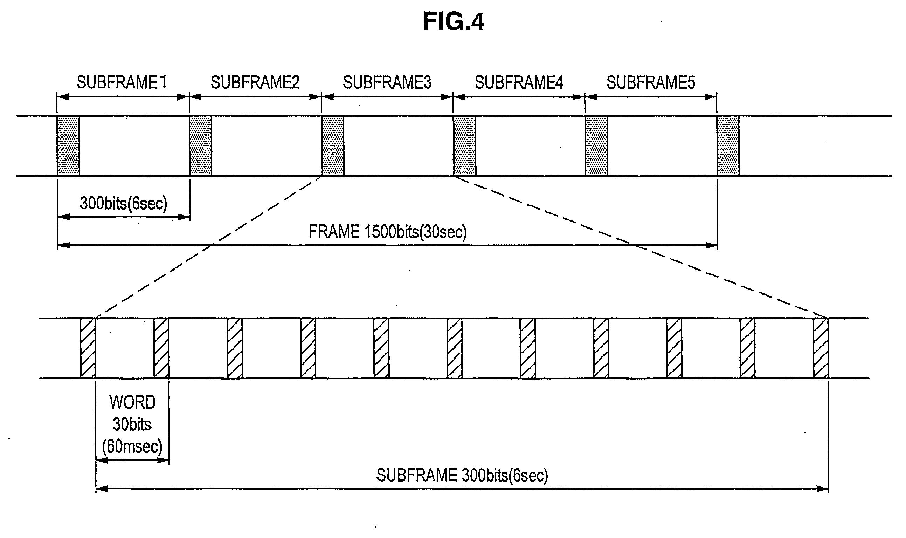

The configuration of the navigation message will now be described with reference to FIG. 4.

FIG. 4 is an explanatory view showing a frame configuration of the navigation message. As shown in FIG. 4, one frame of the navigation message is configured by five subframes. The length of one frame is 30 seconds, and includes an information amount of 1500 bits.

Each subframe is described with data following a preamble, which is a fixed pattern. In FIG. 4, the preamble is colored. The length of each subframe is six seconds, and includes an information amount of 300 bits.

The subframe 3 third from the first subframe 1 contains the parameters for calculating the six elements described in "[1-2] Method of representing artificial satellite position" and the ephemeris information such as the transmission time $t_{oc}$ of the navigation message. The parameters for calculating the six elements include the average anomaly $M_0$ at a reference time, the argument of perigee $\omega_0$, the right ascension of ascending node $\Omega_0$ at the start of the current GPS week, and the orbit inclination $i_0$ at the reference time. The Formula for calculating the average anomaly M, the longitude of ascending node $\Omega$, the argument of perigee $\omega$, and the orbit inclination i using such elements is expressed as below.

[Formula 2]

$$M = M_0 + \left(\sqrt{\frac{\mu}{a^3}} + \Delta n\right)(t - t_e)$$

$$\Omega = \Omega_0 + \dot{\Omega}(t - t_e) - \omega_E(t - t_0)$$

$$\omega = \omega_0 + C_{uc}\cos(2u) + C_{us}\sin(2u)$$

$$r = r_0 + C_{rc}\cos(2u) + C_{rs}\sin(2u) \qquad \text{(Formula 2)}$$

$$i = i_0 + C_{ic}\cos(2u) + C_{is}\sin(2u) + \dot{i}(t - t_e)$$

$$SatelliteClockError = af_0 + af_1(t - t_c) + af_2(t - t_c)^2$$

$$u = \omega_0 + v$$

$\omega_E$: rotation rate of earth
t: observation time
$t_e$: reference time of ephemeris ($t_{oe}$)
$t_c$: reference time of satellite clock ($t_{oc}$)

to: start time of WeeklyEpoch

The fourth subframe 4 and the fifth subframe 5 contain almanac information common in all artificial satellites 10. The almanac information includes the six elements of all the artificial satellites 10, information indicating which artificial satellite 10 can be used, and the like.

As shown on the lower level of FIG. 4, each subframe is configured by ten words. Each word is 60 milliseconds, and includes an information amount of 30 bits. Each word has a parity bit arranged after the data. In FIG. 4, the parity bit is shown with diagonal lines.

Such navigation message further includes a week number (week No), Z-count, epoch time toe, af0 (offset of satellite clock), af1 (drift of satellite clock), af2 (drift of satellite clock frequency), $\Omega$dot (time change rate to right ascension of ascending node), idot (time change rate of orbit inclination), $\Delta$n (average motion difference), Cuc and Cus (magnitude of congruence correction term with respect to argument of latitude), Crc and Cri (magnitude of congruence correction term with respect to orbit radius), SVhealth, A-S, Ionospheric Correction, UTC Parameters, and the like. The epoch time $t_{oe}$ indicates the time the ephemeris information is updated and generated.

[2] Background of present embodiment

The artificial satellite system 1 according to the present embodiment will be schematically described with reference to FIGS. 1 to 4. The background of the present embodiment will be described with a receiver related to the present embodiment as a comparative example.

As described in the "[1] Brief overview of artificial satellite system", the receiver related to the present embodiment receives the navigation message from the artificial satellite 10, and calculates the position of the artificial satellite 10 based on the ephemeris information contained in the navigation message. The receiver related to the present embodiment uses the calculated position of the artificial satellite 10 to solve the equation with the current three-dimensional position of the receiver as unknown.

However, as described in "[1-3] Configuration of navigation message", the frame of the navigation message transmitted from the artificial satellite 10 has a length of about 30 seconds, and is configured by five subframes. The ephemeris information is contained in the subframe third from the first subframe, and thus the receiver related to the present embodiment takes several tens of seconds to a few minutes until calculating the current position when not including the ephemeris information or the time of validity is expired.

Such problem is becoming more important as the receiver of the GPS, which main application is the car navigation system, is now being mounted in mobile telephones, portable imaging devices, and the like. For instance, assume a portable imaging device in which an imaged picture and the positional information acquired by the GPS are recorded in correspondence to each other so that the imaged location of the picture can be checked afterwards. When the user using the portable imaging device moves immediately after imaging the picture, the positional information corresponded to the imaged picture may greatly differ from the actual imaged location if the positional information is acquired after several tens of seconds to a few minutes from the photographing of the picture.

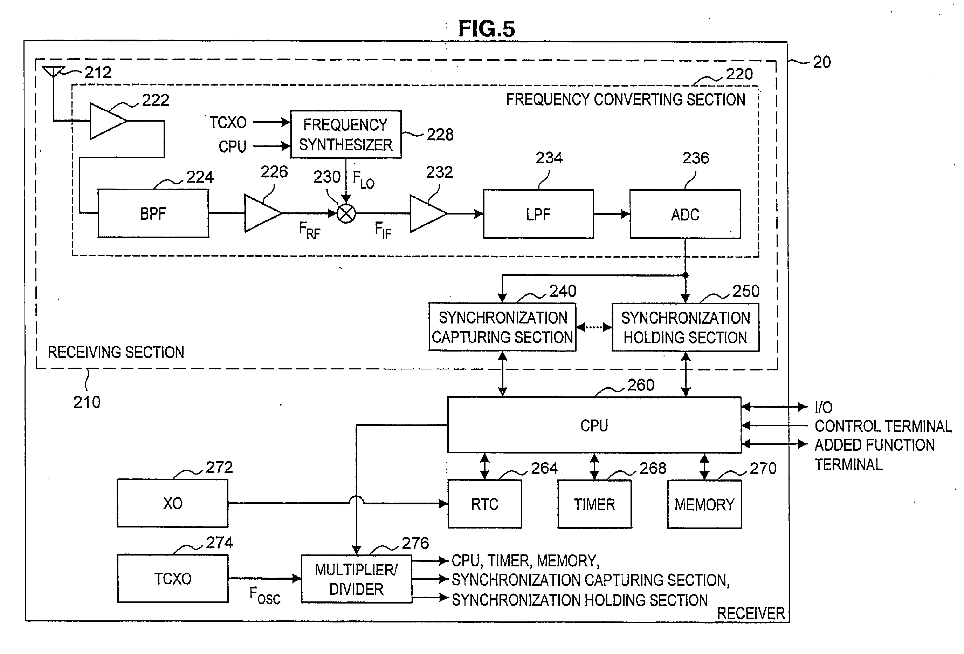

The receiver 20 according to the present embodiment was contrived focusing on such situation. According to the receiver 20 of the present embodiment, the position of the artificial satellite 10 can be calculated without using the ephemeris information contained in the navigation message. Such receiver 20 will be described in detail below with reference to FIGS. 5 to 10.

[3] Configuration of receiver according to present embodiment

[3-1] Hardware configuration of receiver

FIG. 5 is an explanatory view showing a hardware configuration of the receiver 20 according to the present embodiment. As shown in FIG. 5, the receiver 20 includes a receiving section 210 with an antenna 212, a frequency converting section 220, a synchronization capturing section 240, a synchronization holding section 250; a CPU (Central Processing Unit) 260; an RTC (Real Time Clock) 264; a timer 268; a memory 270; an XO (X'tal Oscillator) 272; a TCXO (Temperature Compensated X'tal Oscillator) 274; and a multiplier/divider 276.

The XO 272 oscillates a signal having a predetermined frequency, and provides the oscillated signal to the RTC 264. The TCXO 274 oscillates a signal having a frequency different from the XO 272, and provides the oscillated signal to the multiplier/divider 276. The multiplier/divider 276 performs multiplication, division, or both on the signal provided from the TCXO 274 based on an instruction from the CPU 260. The multiplier/divider 276 provides the signal performed with multiplication, division, or both to a frequency synthesizer 228 of the frequency converting section 220, the CPU 260, the timer 268, the memory 270, the synchronization capturing section 240, and the synchronization holding section 250.

The antenna 212 receives a radio signal such as navigation message transmitted from the artificial satellite 10, converts the radio signal to an electric signal, and provides the electric signal to the frequency converting section 220.

The frequency converting section 220 includes an LNA (Low Noise Amplifier) 222, a BPF (Band Pass Filter) 224, an amplifier 226, a frequency synthesizer 228, a multiplier 230, an amplifier 232, an LPF (Low Pass Filter) 234, and an ADC (Analog Digital Converter) 236.

The LNA 222 amplifies the signal provided from the antenna 211, and provides the same to the BPF 224. The BPF 224 extracts only a specific frequency component of the frequency components of the signal amplified by the LNA, and provides the same to the amplifier 226. The amplifier 226 amplifies the signal (frequency $F_{RF}$) having the frequency component extracted by the BPF 224, and provides the same to the multiplier 230.

The frequency synthesizer 228 uses the signal provided from the TCXO 274, and generates a signal having the frequency $F_{LO}$ based on the instruction from the CPU 260. The frequency synthesizer 228 provides the generated signal having the frequency $F_{LO}$ to the multiplier 230.

The multiplier 230 multiples the signal having the frequency $F_{RF}$ provided from the amplifier 226 and the signal having the frequency $F_{LO}$ provided from the frequency synthesizer 228. In other words, the multiplier 230 down converts the high frequency signal to the IF (Intermediate Frequency) signal (intermediate frequency signal).

The amplifier 232 amplifies the IF signal down converted by the multiplier 230, and provides the same to the LPF 234.

The LPF 234 extracts the low frequency component of the frequency components of the IF signal amplified by the amplifier 230, and provides the signal having the extracted low frequency component to the ADC 236. In FIG. 5, an example where the LPF 234 is arranged between the amplifier 232 and the ADC 236 is described, but the BPF may be arranged between the amplifier 232 and the ADC 236.

The ADC 236 converts the IF signal of analog format provided from the LPF 234 to digital format, and provides the IF signal converted to digital format to the synchronization capturing section 240 and the synchronization holding section 250.

The synchronization capturing section 240 performs synchronization capturing of a spread code of the IF signal provided from the ADC 236 using the signal provided from the multiplier/divider 276 based on the control by the CPU 260, and detects the carrier frequency of the IF signal. An arbitrary configuration such as sliding correlator and matched filter may be used in synchronization capturing. The synchronization capturing section 240 provides the phase of the spread code, the carrier frequency of the IF signal, and the like to the synchronization holding section 250 and the CPU 260.

The synchronization holding section 250 performs synchronization holding of the spread code and the carrier of the IF signal provided from the ADC 236 using the signal provided from the multiplier/divider 276 based on the control by the CPU 260. More specifically, the synchronization holding section 250 operates with the phase of the spread code, the carrier frequency of the IF signal, and the like provided from the synchronization capturing section 240 as initial values. The synchronization holding section 250 demodulates the navigation message contained in the IF signal provided from the ADC 236, and provides the same to the CPU 260.

The CPU 260 calculates the position and speed of each artificial satellite 10 based on the navigation message provided from the synchronization holding section 250, and calculates the position of the receiver 20 by the method described in "[1] Brief overview of artificial satellite system". The CPU 260, which corrects the time information of the RTC 264 based on the navigation message, is connected to a control terminal, an I/O terminal, and an added function terminal to perform various controls. Furthermore, the CPU 260 according to the present embodiment can calculate the position of the artificial satellite 10 without using the navigation message as described in detail in "[3-3] Detailed functions of CPU".

The RTC 264 measures the time using the signal having a predetermined frequency provided from the XO 272. The time measured by the RTC 264 is appropriately corrected by the CPU 260.

The timer 268 performs timing using the signal provided from the multiplier/divider 276. Such timer 268 is referenced when determining the start timing of various controls by the CPU 260.

The memory 270 has a function serving as a working space of the CPU 260, a storage section of a program, a storage section of the navigation message, a model formula storage section, to be hereinafter described, and the like. Such memory 270 may be a nonvolatile memory such as EEPROM (Electrically Erasable Programmable Read-Only Memory), EPROM (Erasable Programmable Read Only Memory); a magnetic disc such as hard disc and disc-shaped magnetic body disc; an optical disc such as CD-R(Compact Disc Recordable)/RW(ReWritable), DVD-R(Digital Versatile Disc Recordable)/RW/+R/+RW/RAM(Random Access Memory), and BD(Blu-Ray Disc(registered trademark))-R/BD-RE; an MO (Magneto Optical) disc, and the like.

[3-2] Brief overview of operation example of receiver

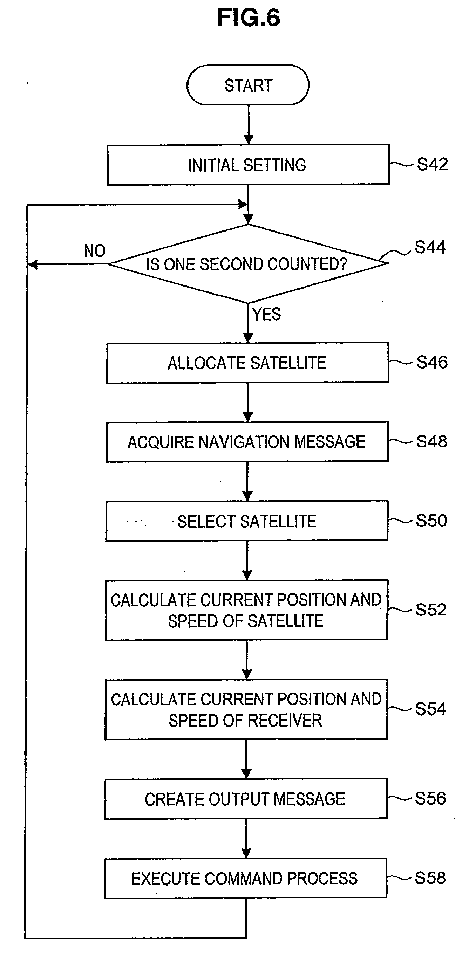

The hardware configuration of the receiver 20 according to the present embodiment has been described with reference to FIG. 5. The operation example of the receiver 20 will not be schematically described with reference to FIG. 6.

FIG. 6 is a flowchart showing the flow of the operation example of the receiver 20 according to the present embodiment. As shown in FIG. 6, when the receiver 20 is activated, the CPU 260 performs an initial setting (S42). Thereafter, when one second is counted by the RTC 264 (S44), the CPU 260 allocates the artificial satellite 10 to each channel (S46).

Thereafter, when the navigation message is acquired by the receiving section 210 (S48), the CPU 260 selects at least four or more artificial satellites 10 to actually capture (S50). The CPU 260 calculates the current position and the speed of the selected artificial satellite 10 (S52), and calculates the current position and the speed of the receiver 20 based on the calculated current position and the speed of the artificial satellite 10 (S54).

Subsequently, the CPU 260 creates an output message showing the calculated current position and the speed of the receiver 20 (S56), and returns to the process of S44 after executing a command process corresponding to the output message (S58).

[3-3] Detailed functions of CPU

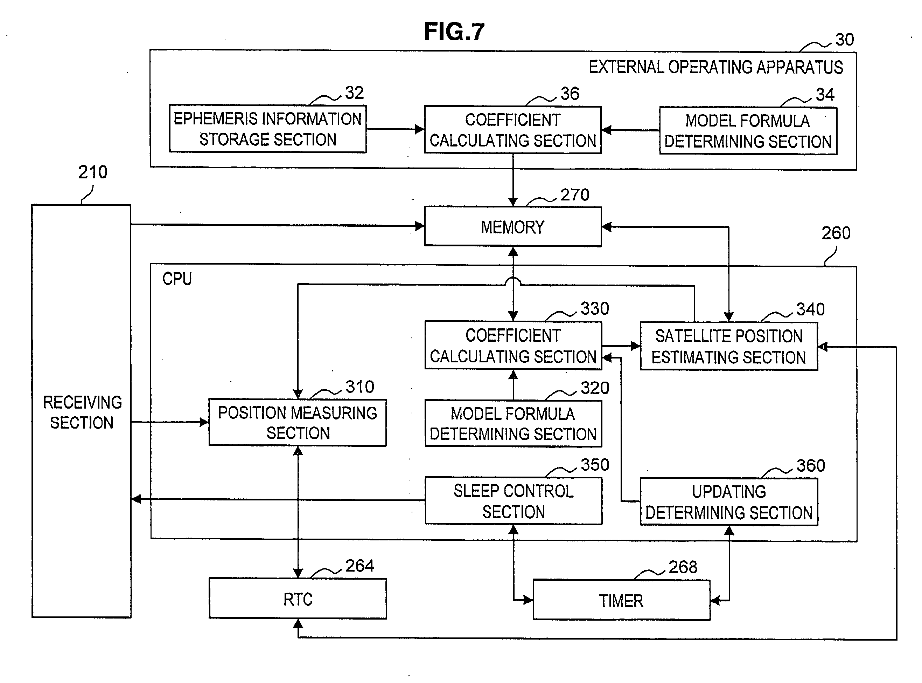

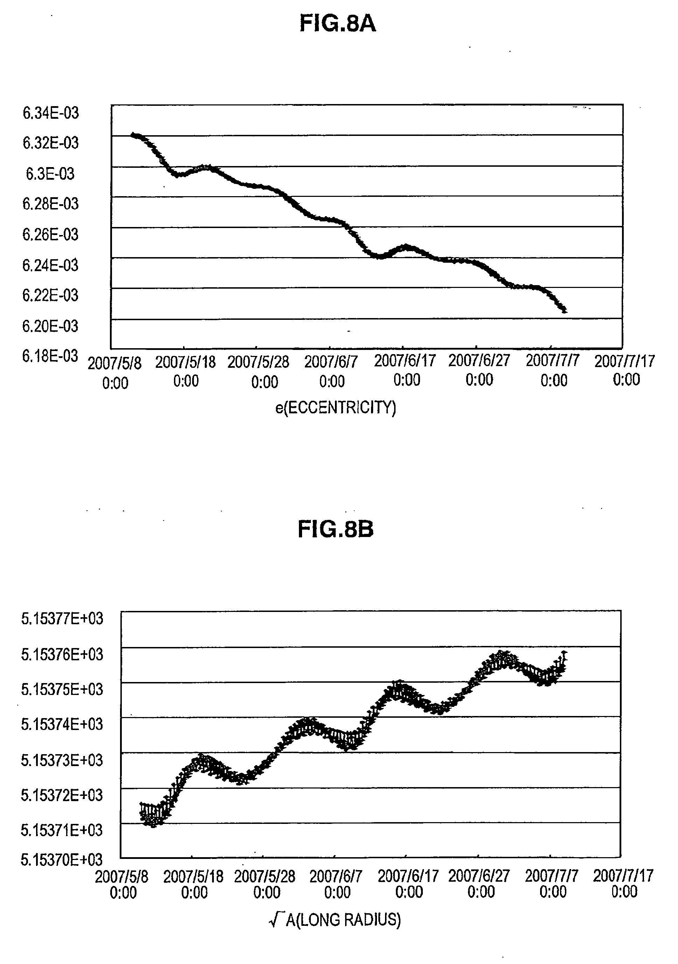

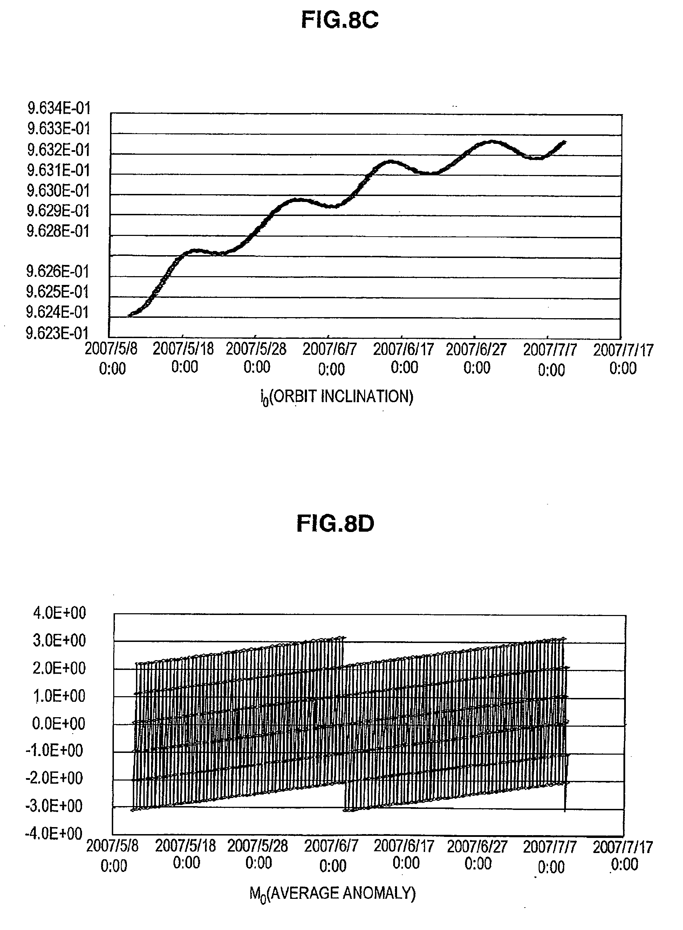

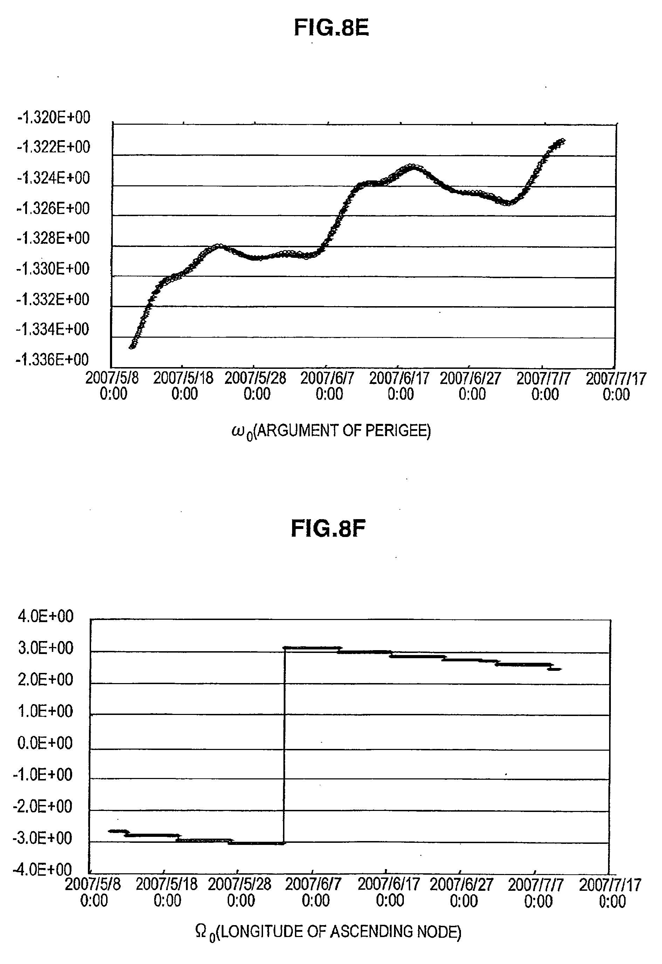

The receiver according to the present embodiment has been schematically described with reference to FIGS. 5 and 6. The detailed functions of the CPU 260 arranged in the receiver 20 according to the present embodiment will now be described with reference to FIGS. 7 and 8.

FIG. 7 is a function block diagram schematically showing one example of the functions implemented in the CPU 260. As shown in FIG. 7, the CPU 260 includes a position measuring section 310, a model formula determining section 320, a coefficient calculating section 330, a satellite position estimating section 340, a sleep control section 350, and an updating determining section 360.

The position measuring section 310 calculates the current position of the receiver 20 using the navigation message provided from the receiving section 210. The position measuring section 310 also has a function serving as an apparatus position estimating section for estimating the position of the receiver 20 based on the position of the artificial satellite 10 estimated by the satellite position estimating section 340.

The model formula determining section 320 determines the model formula for estimating the values of parameters such as the square root of the long radius A of the orbit, the eccentricity e, the average anomaly $M_o$, the argument of perigee $\omega_0$, the right ascension of ascending node $\Omega_0$, the orbit inclination io, and the like, which are the parameters of the ephemeris information. The model formula will be described below.

The change in each parameter of the ephemeris information is assumed to be associated with the period (about 23 hours 56 minutes) the artificial satellite 10 orbits around the earth, the period (about one month) related to the positional relationship with the moon that exerts a gravitational influence, and the period (about one year) related to the positional relationship with the sun that exerts a gravitational influence. Therefore, the value of each parameter of the ephemeris information is represented with the model formula in which an offset amount C is added to the period related to change in each parameter, or the sum of the sine function and the cosine function of one over an integer of such period, as shown in the following Formula 3.

[Formula 3]

$$Y = An\sin(\frac{2\pi}{Tn}X) + Bn\cos(\frac{2\pi}{Tn}X) + C$$

$$n = 1, \cdots, N \qquad \text{(Formula 3)}$$

In Formula 3, Tn indicates each period related to the change in each parameter described above, An indicates the coefficient of the sine function, Bn indicates the coefficient of the cosine function, X indicates a specific time, and N indicates the number of periods to consider. That is, Formula 3 expresses the value of each parameter of the ephemeris information in a model formula (estimate equation) represented by the sum of the periodic function arguments.

The validity of the model formula representing the value of each parameter of the ephemeris information with the sum of the periodic functional arguments will be verified using FIG. 8.

FIG. 8 is an explanatory view showing actual measurement values of each parameter of the ephemeris information, and more specifically, FIG. 8A shows the actual measurement value of the eccentricity e, FIG. 8B shows the actual measurement value of the square root of the long radius A of the orbit, FIG. 8C shows the actual measurement value of the orbit inclination io, FIG. 8D shows the actual measurement value of the average anomaly $M_o$, FIG. 8E shows the actual measurement value of the argument of perigee $\omega_0$, and FIG. 8F shows the actual value of the longitude of

ascending node $\Omega_0$.

With reference to FIG. 8A, the value of the eccentricity e changes to the lower side of the graph as a whole with elapse of time, but it can be recognized that rise and fall are periodically repeated in a short period such as ten days. Similarly, the square root of the long radius A of the orbit also rises as a whole with elapse of time, as shown in FIG. 8B, but rise and fall are periodically repeated in a short period of ten days. With reference to FIGS. 8C to 8F, it can also be recognized that the average anomaly Mo, the longitude of ascending node $\Omega_0$, the argument of perigee $\omega_0$, and the orbit inclination io show change having validity in being expressed with the synthesis of a plurality of frequency components.

However, since each parameter of the ephemeris information show different changes, as shown in FIG. 8, the model formula of each parameter of the ephemeris information, that is, the value of N and the coefficients such as An and Bn are also desirably determined according to each parameter.

The model formula determining section 320 determines the values of N and Tn for each parameter according to the characteristic of each parameter of the ephemeris information. The model formula determining section 320 may eliminate the periodic functional argument of the period of small contribution to the value of the parameter from the model formula. According to such configuration, the number of coefficients to calculate, and the recording amount to the memory 270 can be suppressed.

The coefficient calculating section 330 calculates the An and the Bn in Formula 3 based on each parameter of past the ephemeris information recorded in the memory 270. In this case, the coefficient calculating section 330 calculates the An and the Bn according to the least square method to a value where the value of the following Formula 4 becomes a minimum. In Formula 4, the value of a certain parameter at time Xm corresponds to Ym.

[Formula 4]

$$\sum_{m=0}^{\alpha}\left(y_m - \left(An\sin(\frac{2\pi}{Tn}Xm) + Bn\cos(\frac{2\pi}{Tn}Xm) + C\right)\right)^2 \qquad \text{(Formula 4)}$$

$(X_0\ Y_0), (X_1\ Y_1), \cdots, (X_\alpha\ Y_\alpha)$

The accuracy of the coefficient becomes an issue when the coefficient of the periodic functional argument having a predetermined period is calculated based on the ephemeris information acquired in a time period extremely shorter than the predetermined period, or is calculated based on the ephemeris information acquired in a time period extremely longer than the predetermined period. The coefficient calculating section 330 may change the time period of the past ephemeris information to use according to the period Tn of each periodic functional argument and perform the least square method over plural times.

For instance, the coefficient calculating section 330 may calculate the coefficient of the first periodic functional argument having a long period Tn using the ephemeris information of the first time period, fix the coefficient of the first periodic functional argument, and calculate the coefficient of the second periodic functional argument having a shorter period than the first periodic functional argument using the ephemeris information in the time of the last half of the first time period. According to such configuration, the accuracy of the model formula can be enhanced.

The coefficients An and Bn of each periodic functional argument calculated by the coefficient calculating section 330 in such manner are recorded in the memory 270 for each parameter of the ephemeris information. The memory 270 is also recorded with the ephemeris information acquired by the receiving section 210, but the amount of data of the ephemeris information held in the memory 270 is suppressed from increasing by deleting the old ephemeris information when recording the new ephemeris information.

The coefficients An and Bn of each periodic functional argument may be recorded in the memory 270 by an external operating apparatus 30 when manufacturing the receiver 20. The external operating apparatus 30 includes an ephemeris information storage section 32, a model formula determining section 34, and a coefficient calculating section 36.

The ephemeris information storage section 32 is a storage medium recorded with the past ephemeris information. Similar to the memory 270, the ephemeris information storage section 32 may be a nonvolatile memory such as EEPROM and EPROM; a magnetic disc such as hard disc and disc-shaped magnetic body disc; an optical disc such as CD-R/RW, DVD-R/RW/+R/+RW/RAM, and BD(Blu-Ray Disc(registered trademark))-R/BD-RE; an MO (Magneto Optical) disc, and the like.

Similar to the model formula determining section 320 of the receiver 20, the model formula determining section 34 determines an appropriate model formula for each parameter of the ephemeris information. Similar to the coefficient calculating section 330 of the receiver 20, the coefficient calculating section 36 calculates the coefficient of each periodic functional argument in the model formula determined by the model formula determining section 34 based on the past ephemeris information recorded in the ephemeris information storage section 32.

Therefore, if the coefficients An and Bn of each periodic functional argument calculated by the external operating apparatus 30 are recorded in the memory 270 when manufacturing the receiver 20, the model formula determining section 320 and the coefficient calculating section 330 may not necessarily need to be arranged in the receiver 20. The configuration of the receiver 20 can be simplified as a result.

The satellite position estimating section 340 calculates the value of each parameter of the ephemeris information by substituting the coefficient calculated by the coefficient calculating section 330 and the current time serving as an arbitrary time to the model formula determined by the model formula determining section 320. In this case, the satellite position estimating section 340 may use the time information being held, or may use the time information (TOW) contained in the HOW (Hand Over Word) of the navigation message. The satellite position estimating section 340 estimates the current position of the artificial satellite 10 based on the calculated value of each parameter of the ephemeris information. For instance, the satellite estimating section 340 estimates the values of the average anomaly M, the argument of perigee $\omega$, the right ascension of ascending node $\Omega$, and the orbit inclination i from the average anomaly Mo, the argument of perigee $\omega_0$, the right ascension of ascending node $\Omega_0$, and the orbit inclination io, and the like.

The position measuring section 310 can estimate the current position of the receiver 20 using the current position of the artificial satellite 10 estimated by the satellite position measuring section 340. In this case, the position measuring section 310 may use the time information being held or may use the time information contained in the HOW of the navigation message, similar to the satellite position estimating section 340.

As described above, according to the receiver 20 of the present embodiment, the satellite position estimating section 340 can estimate the position of the artificial satellite 10 at an early point according to the model formula. However, the reliability of the value of the coefficient of each periodic functional argument calculated by the coefficient calculating section 330 lowers with elapse of time. The function of the updating determining section 360 to update the value of the coefficient is thus implemented in the CPU 260 according to the present embodiment.

When updating the value of the coefficient, the past ephemeris information is desirably sufficiently recorded in the memory 270, but the past ephemeris information may not be sufficiently recorded in the memory 270 if the receiver 20 is not activated for a long time period. Thus, the function of the sleep control section 350 to record the ephemeris information in the memory 270 at regular intervals is implemented in the CPU 260 according to the present embodiment. The functions of the sleep control section 350 and the updating determining section 360 will be described below.

(Sleep control section 350)

If the receiver 20 is activated but is in the sleep mode, the sleep control section 350 references the timer 268 and causes the receiving section 210 to intermittently acquire the navigation message at the priority issues do not arise in position measurement.

Furthermore, even if the receiver 20 is not activated, the sleep control section 350 activates the receiver 20 at regular intervals with reference to the timer 268 to cause the receiving section 210 to acquire the navigation message.

According to such configuration, the new ephemeris information is intermittently acquired by the receiving section 210. As a result, a case where the ephemeris information is not acquired for a long time period, and the coefficient of each periodic functional argument is not appropriately calculated can be suppressed.

(Updating determining section 360)

The updating determining section 360 references the timer 268, and causes the coefficient calculating section 330 to again calculate, that is, update the coefficient of each periodic functional argument at a predetermined timing. The predetermined timing may be after a predetermined time period has elapsed from the previous update by the coefficient calculating section 330 or may be when request is made by the user.

According to such configuration, the reliability of the value of the coefficient of each periodic functional argument is prevented from lowering with elapse of time, and the reliability of the value of the coefficient of each periodic functional argument can be maintained.

[3-4] Flow of position estimating method

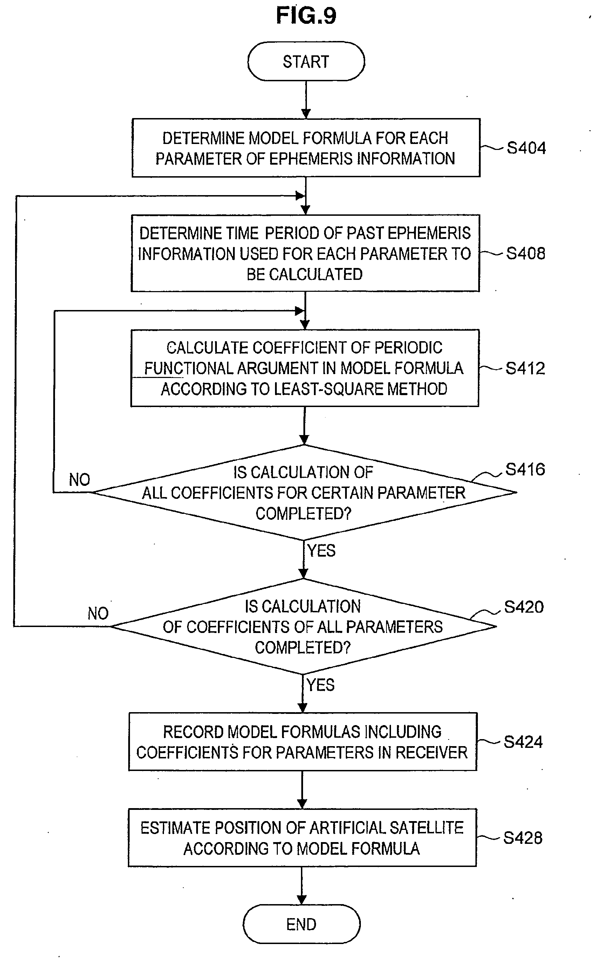

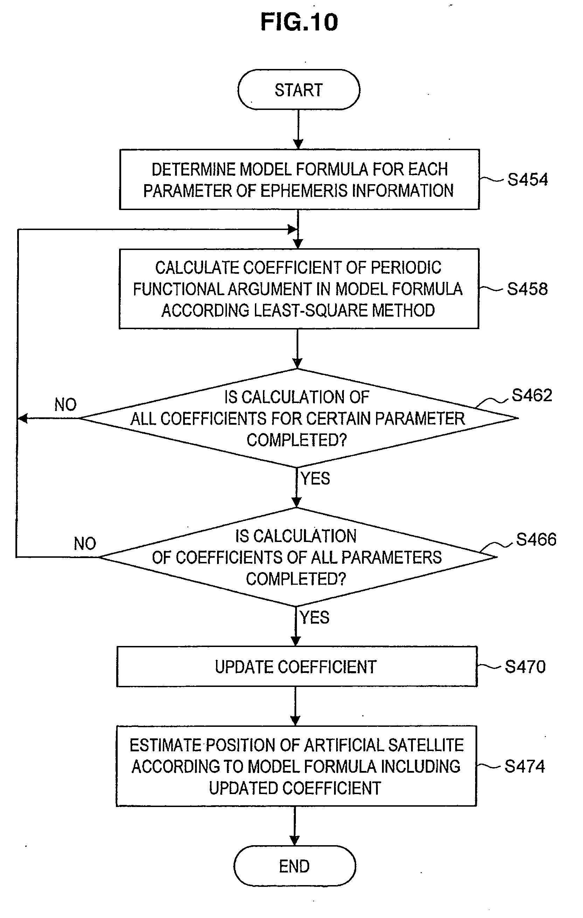

The detailed functions of the CPU 260 have been described with reference to FIGS. 7 and 8. Now, the flow of the position estimating method will be described with reference to FIGS. 9 and 10.

FIG. 9 is a flowchart showing the flow from the determination of the model formula in time of manufacturing to the estimation of the position of the artificial satellite 10. First, as shown in FIG. 9, the model formula determining section 34 of the external operating apparatus 30 determines the model formula for each parameter of the ephemeris information (S404). The coefficient calculating section 36 then determines the time period of the past ephemeris information to be used for each parameter to calculate (S408).

Thereafter, the coefficient calculating section 36 calculates the coefficient of the periodic functional argument in the model formula according to the least square method (S412). When calculation of all the coefficients for a certain parameter is terminated (S416), and the calculation of the coefficients of all the parameters is terminated (S420), the model formula including the coefficient of each parameter is recorded in the memory 270 of the receiver 20 (S424). The satellite position estimating section 340 of the receiver 20 can estimate the position of the artificial satellite 10 according to the model formula recorded in the memory 270 in such manner (S428).

FIG. 10 is a flowchart showing the flow from the update of the coefficient to the estimation of the position of the artificial satellite 10. First, as shown in FIG. 10, the model formula determining section 320 of the receiver 20 determines the model formula for each parameter of the ephemeris information (S454). The coefficient calculating section 330 calculates the coefficient of the periodic functional argument in the model formula according to the least square method using the past ephemeris information recorded in the memory 270 (S458).

When calculation of all the coefficients for a certain parameter is terminated (S462), and the calculation of the coefficients of all the parameters is terminated (S466), the coefficient calculating section 330 updates the coefficient in the model formula recorded in the memory 270 to the calculated coefficient (S470). The satellite position estimating section 340 of the receiver 20 can estimate the position of the artificial satellite 10 according to the model formula including the updated coefficient (S474).

[4] Conclusion

As described above, in the present embodiment, the satellite position estimating section 340 can estimate the position of the artificial satellite 10 without using the ephemeris information contained in the navigation message. In other words, the receiver 20 according to the present embodiment can grasp the position of the artificial satellite 10 more rapidly and through a relatively easy method of calculating the model formula represented by the sum of the periodic functional argument.

The memory 270 is recorded with new ephemeris information. The coefficient calculating section 330 calculates each coefficient of the periodic functional argument from the ephemeris information recorded in the memory 270 based on an instruction from the updating determining section 360, and thus each coefficient of the period functional argument is sequentially updated to a new value. Therefore, according to the receiver 20, the accuracy of the model formula for estimating the position of the artificial satellite 10 can be maintained even if time has elapsed.

The receiver 20 can estimate the position of the artificial satellite 10 without using the ephemeris information from the artificial satellite 10, and thus the position of the receiver 20 can be estimated without demodulating the ephemeris information from the artificial satellite 10. Thus, the time for estimating the position of the receiver 20 is reduced, and the usability is enhanced.

In the above description, an example of estimating the parameters such as the square root of the long radius A of the orbit, the eccentricity e, the average anomaly Mo, the argument of perigee $\omega_0$, the right ascension of ascending node $\Omega_0$, the orbit inclination io, and the like has been described, but the present invention is not limited to such example. For instance, other elements such as $\Omega$dot, idot, $\Delta$n, Cuc and Cus, Crc and Cri may be estimated by applying the above-described method.

It should be understood by those skilled in the art that various modifications, combinations, sub-combinations and alterations may occur depending on design requirements and other factors insofar as they are within the scope of the appended claims or the equivalents thereof.

For instance, each step in the process of the receiver 20 of the present specification may not be processed in time-series along the order described in the flowchart. Each step in the process of the receiver 20 may include processes (e.g., parallel process or process by object) executed in parallel or individually.

A computer program for functioning the CPU 260 as the position measuring section 310, the model formula determining section 320, the coefficient calculating section 330, the satellite position estimating section 340, the sleep control section 350, and the updating determining section 360 is also provided. A storage medium stored with the computer program is also provided. Each function block shown in the function block diagram of FIG. 7 is configured by hardware, so that the series of processes can be realized by hardware.

The present application contains subject matter related to that disclosed in Japanese Priority Patent Application JP 2008-088078 filed in the Japan Patent Office on March/28/2008, the entire content of which is hereby incorporated by reference.

**Claims**

1. An information processing apparatus comprising a satellite position estimating section for estimating a position of an artificial satellite at an arbitrary time by substituting the arbitrary time to an estimate equation of the position of the artificial satellite represented by a sum of one, or two or more periodic functional arguments.

2. The information processing apparatus according to claim 1, further comprising:

   a receiving section for receiving a signal transmitted from the artificial satellite, and acquiring satellite positional information indicating the position of the artificial satellite contained in the signal;
   a storage section for recording the satellite positional information acquired by the receiving section; and
   a coefficient calculating section for calculating each coefficient of the periodic functional argument in the estimate equation from the satellite positional information recorded in the storage section, wherein
   the satellite position estimating section substitutes the coefficient calculated by the coefficient calculating section to the estimate equation in addition to the arbitrary time to estimate the position of the artificial satellite.

3. The information processing apparatus according to claim 2, wherein the coefficient calculating section calculates the coefficient of the periodic functional argument having a first period based on the satellite positional information acquired by the receiving section within a first time period, and calculates the coefficient of the periodic functional argument having a second period shorter than the first period based on the satellite positional information acquired by the receiving section within a second time period shorter than the first time period.

4. The information processing apparatus according to claim 2, wherein
   the satellite positional information includes a plurality of parameters for specifying the position of the artificial satellite, and
   the estimate equation differs according to each of the plurality of parameters.

5. The information processing apparatus according to claim 2, further comprising a reception controlling section for intermittently activating the receiving section in a sleep mode to cause the receiving section to acquire the satellite positional information.

6. The information processing apparatus according to claim 2, further comprising an elapsed time determining section for determining whether or not a predetermined time has elapsed from the calculation of each coefficient of the periodic functional argument by the coefficient calculating section, wherein
   the coefficient calculating section again calculates each coefficient of the periodic functional argument when the elapsed time determining section determines that the predetermined time has elapsed.

7. The information processing apparatus according to claim 2, further comprising an apparatus position estimating section for estimating the position of the information processing apparatus at the arbitrary time based on the position of the artificial satellite at the arbitrary time estimated by the satellite position estimating section.

8. The information processing apparatus according to claim 1, further comprising a storage section for recording the estimate equation obtained in an external device, wherein
   the satellite position estimating section estimates the position of the artificial satellite based on the estimate equation recorded in the storage section.

9. A position estimating method comprising the steps of:

   calculating each coefficient of a periodic functional argument in an estimate equation of a position of an artificial satellite represented by a sum of one, or two or more periodic functional arguments from satellite positional information indicating a previous position of the artificial satellite; and
   estimating the position of the artificial satellite at an arbitrary time by substituting the arbitrary time and the coefficient to the estimate equation.

10. A program for causing a computer to function as a satellite position estimating section for estimating a position of an artificial satellite at an arbitrary time by substituting the arbitrary time to an estimate equation of the position of the artificial satellite represented by a sum of one, or two or more periodic functional arguments.

**11.** An artificial satellite system comprising an artificial satellite, and a receiving device for receiving a signal transmitted from the artificial satellite, wherein the artificial satellite transmits a signal containing satellite positional information indicating the position of the artificial satellite, and
the receiving device includes:

a receiving section for receiving the signal transmitted from the artificial satellite, and acquiring the satellite positional information indicating the position of the artificial satellite contained in the signal;
a storage section for recording the satellite positional information acquired by the receiving section;
a coefficient calculating section for calculating each coefficient of a periodic functional argument in an estimate equation of the position of the artificial satellite represented by a sum of one, or two or more periodic functional arguments from the satellite positional information recorded in the storage section; and
a satellite position estimating section for estimating the position of the artificial satellite at an arbitrary time by substituting the arbitrary time and the coefficient calculated by the coefficient calculating section to the estimate equation.

**FIG.1**

**FIG.2**

EP 2 105 757 A2

# FIG.3

# FIG.4

| SUBFRAME1 | SUBFRAME2 | SUBFRAME3 | SUBFRAME4 | SUBFRAME5 |

300bits(6sec)

FRAME 1500bits(30sec)

WORD
30bits
(60msec)

SUBFRAME 300bits(6sec)

EP 2 105 757 A2

# FIG.5

EP 2 105 757 A2

# FIG.6

```
        ( START )
            │
            ▼
   ┌─────────────────────┐
   │   INITIAL SETTING    │~ S42
   └─────────────────────┘
            │
   ┌────────┘
   │        ▼
   │   ◇─────────────────────◇
NO │  IS ONE SECOND COUNTED?  ~ S44
◄──┤   ◇─────────────────────◇
   │        │ YES
   │        ▼
   │   ┌─────────────────────┐
   │   │   ALLOCATE SATELLITE │~ S46
   │   └─────────────────────┘
   │        │
   │        ▼
   │   ┌─────────────────────┐
   │   │ ACQUIRE NAVIGATION   │~ S48
   │   │      MESSAGE         │
   │   └─────────────────────┘
   │        │
   │        ▼
   │   ┌─────────────────────┐
   │   │   SELECT SATELLITE   │~ S50
   │   └─────────────────────┘
   │        │
   │        ▼
   │   ┌─────────────────────┐
   │   │ CALCULATE CURRENT    │
   │   │ POSITION AND SPEED   │~ S52
   │   │    OF SATELLITE      │
   │   └─────────────────────┘
   │        │
   │        ▼
   │   ┌─────────────────────┐
   │   │ CALCULATE CURRENT    │
   │   │ POSITION AND SPEED   │~ S54
   │   │    OF RECEIVER       │
   │   └─────────────────────┘
   │        │
   │        ▼
   │   ┌─────────────────────┐
   │   │ CREATE OUTPUT MESSAGE│~ S56
   │   └─────────────────────┘
   │        │
   │        ▼
   │   ┌─────────────────────┐
   │   │ EXECUTE COMMAND      │~ S58
   │   │     PROCESS          │
   │   └─────────────────────┘
   │        │
   └────────┘
```

# FIG.7

EXTERNAL OPERATING APPARATUS · 30

EPHEMERIS INFORMATION STORAGE SECTION · 32

COEFFICIENT CALCULATING SECTION · 36

MODEL FORMULA DETERMINING SECTION · 34

MEMORY · 270

210

260

RECEIVING SECTION

CPU

COEFFICIENT CALCULATING SECTION · 330

SATELLITE POSITION ESTIMATING SECTION · 340

POSITION MEASURING SECTION · 310

MODEL FORMULA DETERMINING SECTION · 320

SLEEP CONTROL SECTION · 350

UPDATING DETERMINING SECTION · 360

RTC · 264

TIMER · 268

EP 2 105 757 A2

## FIG.8A

e(ECCENTRICITY)

## FIG.8B

√A(LONG RADIUS)

## FIG.8C

$i_0$(ORBIT INCLINATION)

## FIG.8D

$M_0$(AVERAGE ANOMALY)

## FIG.8E

$\omega_0$(ARGUMENT OF PERIGEE)

## FIG.8F

$\Omega_0$(LONGITUDE OF ASCENDING NODE)

# FIG.9

```
START
  │
  ▼
```

| DETERMINE MODEL FORMULA FOR EACH PARAMETER OF EPHEMERIS INFORMATION | ~S404 |

```
  │
  ▼
```

| DETERMINE TIME PERIOD OF PAST EPHEMERIS INFORMATION USED FOR EACH PARAMETER TO BE CALCULATED | ~S408 |

```
  │
  ▼
```

| CALCULATE COEFFICIENT OF PERIODIC FUNCTIONAL ARGUMENT IN MODEL FORMULA ACCORDING TO LEAST-SQUARE METHOD | ~S412 |

```
  │
  ▼
```

NO ◄── IS CALCULATION OF ALL COEFFICIENTS FOR CERTAIN PARAMETER COMPLETED? ~S416

```
  │ YES
  ▼
```

NO ◄── IS CALCULATION OF COEFFICIENTS OF ALL PARAMETERS COMPLETED? ~S420

```
  │ YES
  ▼
```

| RECORD MODEL FORMULAS INCLUDING COEFFICIENTS FOR PARAMETERS IN RECEIVER | ~S424 |

```
  │
  ▼
```

| ESTIMATE POSITION OF ARTIFICIAL SATELLITE ACCORDING TO MODEL FORMULA | ~S428 |

```
  │
  ▼
 END
```

# FIG.10

```
            ┌─────────────┐
            │    START    │
            └──────┬──────┘
                   │
                   ▼
    ┌──────────────────────────────┐
    │ DETERMINE MODEL FORMULA FOR EACH │ ─── S454
    │ PARAMETER OF EPHEMERIS INFORMATION │
    └──────────────┬───────────────┘
                   │
                   ▼
    ┌──────────────────────────────┐
    │ CALCULATE COEFFICIENT OF PERIODIC │
    │ FUNCTIONAL ARGUMENT IN MODEL FORMULA │ ─── S458
    │ ACCORDING LEAST-SQUARE METHOD │
    └──────────────┬───────────────┘
                   │
                   ▼
         IS CALCULATION OF           ─── S462
    NO ◄── ALL COEFFICIENTS FOR CERTAIN PARAMETER
         COMPLETED?
                   │ YES
                   ▼
         IS CALCULATION            ─── S466
    NO ◄── OF COEFFICIENTS OF ALL PARAMETERS
         COMPLETED?
                   │ YES
                   ▼
    ┌──────────────────────────────┐
    │      UPDATE COEFFICIENT       │ ─── S470
    └──────────────┬───────────────┘
                   │
                   ▼
    ┌──────────────────────────────┐
    │ ESTIMATE POSITION OF ARTIFICIAL SATELLITE │
    │ ACCORDING TO MODEL FORMULA INCLUDING │ ─── S474
    │       UPDATED COEFFICIENT       │
    └──────────────┬───────────────┘
                   │
                   ▼
            ┌─────────────┐
            │     END     │
            └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   JP 11064481 A

•   JP 2008088078 A